(19) **Europäisches Patentamt**
**European Patent Office**
**Office européen des brevets**

(11) **EP 1 932 898 A1**

(12) **EUROPEAN PATENT APPLICATION**

(43) Date of publication:
**18.06.2008 Bulletin 2008/25**

(51) Int Cl.:
*C10J 3/62* (2006.01)   *C10J 3/66* (2006.01)

(21) Application number: **06425827.0**

(22) Date of filing: **11.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Corlando, Giorgio**
**10146 Torino (IT)**

(72) Inventor: **Corlando, Giorgio**
**10146 Torino (IT)**

(74) Representative: **Freyria Fava, Cristina**
**Buzzi, Notaro & Antonielli d'Oulx Srl**
**Via Maria Vittoria, 18**
**10123 Torino (IT)**

(54) **Plant for the production of hydrogen and methane based combustible gas from vegetable and organic biomasses and process thereof**

(57)    Described herein is a plant (1) for the production of combustible gas starting from vegetable and/or organic biomasses comprising:
- a reactor (3) having a first section (34), where there take place simultaneously the reactions of pyrolysis of the biomass and gasification of the carbon produced by the reaction of pyrolysis, and a second section (32), where there takes place the reaction of reforming of the CO produced by the reaction of pyrolysis;
- a system (2) for feeding the biomass to the bottom section (34) of the reactor (3);
- means (45, 47) for introducing steam into the reactor (3);
- an outlet pipe (37) for collection of the combustible gas produced within the reactor (3); and
- means for heating the reactor (3).

FIG. 2

EP 1 932 898 A1

**Description**

The present invention concerns a plant for the production of hydrogen-and-methane-based combustible gas starting from vegetable and organic biomasses and the corresponding process.

The purpose of the present invention is to provide a plant for the production of combustible gas which, using vegetable and organic biomasses as raw material, implements a process having a high yield in terms of hydrogen, methane and light hydrocarbons, and a relatively low production of carbon monoxide.

According to the present invention, said purpose is achieved thanks to the solution recalled specifically in the ensuing claims. The claims form an integral part of the technical teaching provided herein in relation to the invention.

The invention relates to a plant that enables simultaneously in the same reactor i) a reaction of pyrolysis in the total absence of oxygen, ii) a reaction of reforming of carbon monoxide in $CO_2$ and $H_2$, and iii) a reaction of gasification of the pyrolytic carbon, with the production of a combustible gas with calorific value of approximately 6500 kcal/m$^3$ starting from vegetable and organic biomasses.

The subject of the present invention is also the process implemented by means of the plant for the production of hydrogen-and-methane-based combustible gas starting from vegetable and organic biomasses.

The invention will now be described in detail, purely by way of non-limiting example, with reference to the annexed plate of drawings, in which:

- Figure 1 is a perspective view of a preferred embodiment of the plant according to the present invention; and
- Figure 2 is a cross-sectional view of an embodiment of the reactor of the plant according to the present invention.

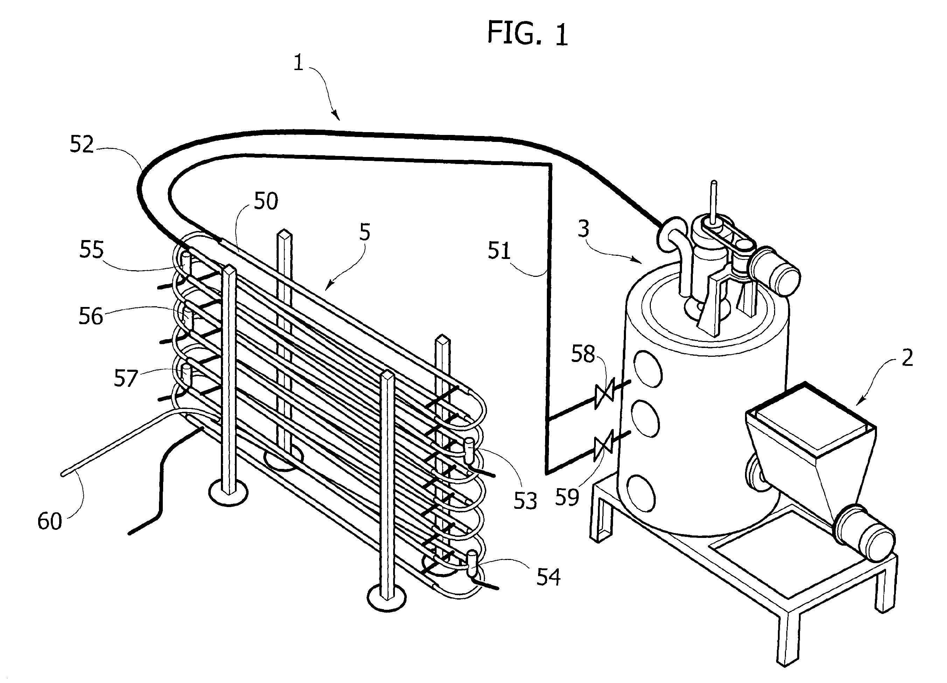

With reference to Figure 1, the plant - designated as a whole by the reference number 1 - is constituted by a system 2 for feeding the raw material formed from vegetable and organic biomasses, by a reactor 3 within which the reactions of pyrolysis, reforming of CO and gasification of the pyrolytic carbon take place, and by a heat exchanger 5 for the purification of the combustible gas produced within the reactor 3.

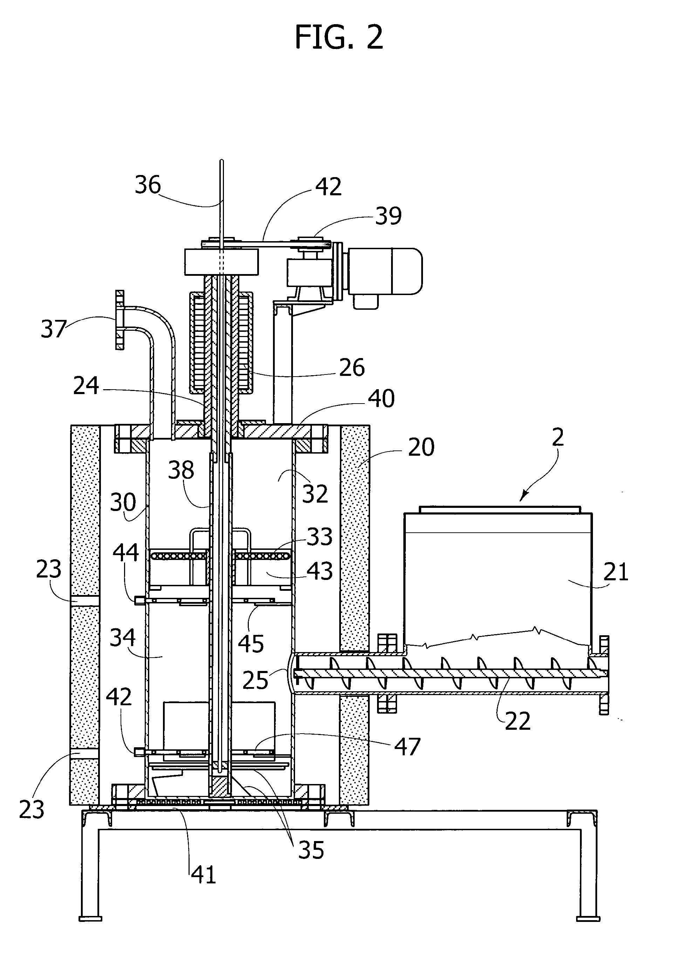

The system 2 for feeding the raw material to the reactor 3 - illustrated in Figure 2 - comprises a sealed tank 21 within which the biomass is introduced. The biomass is fed into the reactor 3 by means of a rotary auger 22, which introduces the biomass into a bottom section 34 of the reactor 3 through a communication hole 25. The auger 22 is driven by a motor reducer (not illustrated) provided with a speed variator for continuous feed of the biomass to the reactor 3. The sealed tank 21 can be provided with valves for the control of the introduction of water therein for regulating the degree of moisture of the biomass.

In the currently preferred embodiment illustrated in Figure 2, the reactor 3 is made up of a cylindrical structure 30 having a top flange 40 and a bottom flange 41, and an insulating coating or jacket 20, for example rock wool, for thermal insulation of the reactor from the external environment. Present within the insulating coating 20 is at least one blind hole 27, which enables use of thermocouples for the measurement of the temperature of the reactor 3.

The reactor 3 comprises a bottom section 34, a central section 43, and a top section 32. In the bottom section 34 there take place i) the reaction of pyrolysis of the biomass in the absence of air and oxygen, and ii) the reaction of gasification of the residual pyrolytic carbon resulting from the reaction of pyrolysis. In the top section 32, there takes place the reaction of reforming of the CO produced during the reaction of pyrolysis.

Located underneath the bottom flange 41 of the reactor 3 is a heating device (not illustrated) for heating the reactor 3 to the temperature of pyrolysis of the biomass. The heating device is preferably constituted by a gas burner provided with at least one flame nozzle, which enables heating of the reactor 3 to a temperature of approximately 550-600°C. The burner is fed with liquid gas, for example with part of the gas and of the self-produced fluids.

The bottom section 34 of the reactor 3 comprises a blade stirrer 35 for stirring the biomass. The stirrer 35 is driven by an electric motor 39, positioned above the top flange 40 of the reactor, which, by means of a pulley 42, controls a drive shaft 38 set longitudinally within the reactor 3. The drive shaft 38 is provided, at its proximal end external to the reactor 3, with a water-cooling system 26, for example made up of a labyrinth with circulation of water. The drive shaft 38 is moreover provided with a fixed sleeve 24, which prevents exit of the combustible gas produced within the reactor 3.

Positioned coaxially within the drive shaft 38 is a water-feed pipe 36 for the introduction of water into the bottom section 34 of the reactor. The water-feed pipe 36 introduces the water into the reactor 3 by means of perforated tubes associated to the blades of the stirrer 35. In this way, whilst the biomass undergoing pyrolysis is stirred continuously, it is possible to introduce water, obtaining vaporization thereof in the bottom section 34 of the reactor for the purpose of enabling the reaction of gasification of the pyrolytic carbon produced during the reaction of pyrolysis of the biomass. The water-feed pipe 36 is supplied by a water distributor (not illustrated) positioned above the top flange 40 of the reactor 3.

Moreover provided in the bottom section 34 is a tube 47 having a preferably spiral configuration and numerous discharge holes for blowing superheated steam into the reactor 3 to bring about the reaction of gasification of the pyrolytic carbon. The tube 47 communicates with the outside of the reactor 3 by means of a joint 42 and a hole 23 in the insulating coating 20.

Provided in the central section 43 of the reactor 3 is a rack 33 filled with a particulate mass, preferably formed by silicon particles. Even more preferably the particulate mass comprises silicon spheres. The purpose of the rack 33 is to slow down the rate of flow of gas produced in the bottom section 34 so as to guarantee completion of the reaction of reforming of CO in the top section 32.

Moreover provided in the central section 43 is a tube 45, with preferably spiral configuration, having numerous discharge holes for blowing in superheated steam useful for reforming the CO produced by the reaction of pyrolysis in the top section 32. The tube 45 communicates with the outside of the reactor 3 by means of a joint 44 and a hole 23 made in the insulating coating 20.

The top section 32 of the reactor 3 communicates with the outside world through an outlet pipe 37 that enables collection of the combustible gas produced within the reactor 3.

The heat exchanger 5 is constituted by a gas/air heat exchanger and enables purification by means of fractionated distillation of the combustible gas coming from the reactor 3; i.e., it separates the liquid phase of the combustible gas from its gas phase and abates almost all of the steam contained therein. It is possible to use other types of heat exchangers, for example of a gas/liquid type, which operate by the use of coolants.

The heat exchanger 5 - illustrated in Figure 1 - has a coil-like structure for the fractionated separation of the different components of the combustible gas. The combustible gas is introduced into the heat exchanger 5 through a tube 52 connected to the outlet pipe 37 of the reactor 3. The heat exchanger 5 enables separation, at the end of a first coil 50, of the steam contained in the combustible gas and reintroduction thereof into the reactor 3 by means of a connection tube 51, associated to which are two valves 58 and 59 for control of the flow of steam. The heat exchanger 5 - through a series of outlet pipes 53, 54, 55, 56 and 57 - enables separation of the different liquid phases of the combustible gas produced. One of the different liquid phases is formed by a combustible liquid gas, which, collected by means of the outlet pipes 53 and 56, is used for supplying the device for heating the reactor 3.

The purified combustible gas is collected by a pipe for outlet of the combustible gas 60.

The fraction of $CO_2$ still present in the combustible gas is separated from the combustible gas by means of a reactor for abatement of $CO_2$ (not illustrated), which operates according to traditional processes of inorganic chemistry.

The process implemented by means of the plant described above preferably uses as raw material shredded vegetable biomasses with an average content of moisture of 25% or else purposely prepared organic biomasses of various types.

The reaction of pyrolysis, which occurs in the bottom section 34 of the reactor 3, enables thermal scission without combustion of the biomass, obtaining - as a function of the temperature and the duration of the process - a solid phase, a liquid phase, and a gas phase. In the process forming the subject of the present invention the reaction of pyrolysis is conducted at approximately 550-600°C for approximately 4-5 minutes to obtain approximately 25 wt% of carbon (solid phase) and the remaining 75% of gas phase. By carrying out a hypothetical operation of cooling of the gas produced by just the reaction of pyrolysis a gas is obtained that has a 30-35 wt% of pyrolytic oil (liquid phase) and 40-45 wt% of pyrolytic gas (gas phase). Since the process inside the reactor 3 takes place in the total absence of oxygen, the gas phase presents, at the end of just the reaction of pyrolysis, the following composition: 35-40% of CO, 35-40% of $CO_2$, 10-15% of $H_2$ and 5-8% of $CH_4$, and light hydrocarbons.

The reaction of gasification of the pyrolytic carbon (solid phase produced by the reaction of pyrolysis), which takes place in the bottom section 34 of the reactor 3, proceeds according to the following reaction:

$$C + 2H_2O = CO_2 + 2H_2 - 17.7 \text{ kcal.}$$

The reaction of gasification is an endothermic reaction, but, since it takes place in the bottom section 34 of the reactor 3, where the heating device is installed, is sufficient to continue normal heating. At the operating temperature of the process forming the subject of the present invention (550-600°C) an equilibrium is reached which is practically almost altogether shifted towards the formation of $CO_2$ and $H_2$. Consequently, from 25% of solid phase, made up basically of carbon, obtained by the reaction of pyrolysis, approximately 210-220 g of carbon can be obtained, which, when gasified with steam, produces 0.80 $m^3$ of hydrogen.

In the experiments conducted by the present inventors it has been found that, with blowing-in of steam, the reaction of gasification occurs as described, but the hydrogen that develops binds immediately with the carbon present, to generate methane gas. Furthermore, the oxygen liberated binds also to the carbon, but in view of the abundance of carbon more CO is produced than $CO_2$.

The reaction of reforming of the carbon monoxide produced in the reaction of pyrolysis is conducted in the top section 32 of the reactor and enables production of other hydrogen according to the following reaction:

$$CO + H_2O = CO_2 + H_2 + 10.4 \text{ kcal.}$$

Consequently, by blowing superheated steam into the central section of the reactor, where the rack 33 is positioned, reforming of the CO produced by the reaction of pyrolysis takes place. The reaction of reforming produces (expressed in vol%):

- at 400°C: 0.85% CO. 32.78% $CO_2$, 66.37% $H_2$;
- at 500°C: 4.52% CO, 30.33% $CO_2$, 66.15% $H_2$.

In the operating conditions of the process according to the present invention, complete with all three reactions, it is possible to obtain from one kilogram of biomass, with the addition of 250 g of steam, a gas phase of hydrogen-and-methane-based combustible gas of approximately 1.30-1.35 $m^3$ of combustible gas.

The combustible gas produced according to the process forming the subject of the present invention (pyrolysis of the biomass, gasification of the pyrolytic carbon, reforming of CO and purification of the gas phase produced within the reactor) has the following composition:

$H_2$ 36.68% - $CH_4$ 48.18% - hydrocarbons 3.43% - CO 11.70% with a calorific value of 6 350 kcal/$m^3$, which can be used instead of methane after varying the regulation of normal burners.

It is moreover the opinion of the holder of the present patent application that, by adjusting the physical parameters of reaction (for example, temperature, quantity of steam introduced, etc.), it is possible to achieve a more complete reforming of CO by bringing towards zero the percentage of CO in the combustible gas in favour of a further increase of hydrogen.

Appearing in Table 1 are the compositions (expressed in vol%) of the gas obtained by conducting a simple reaction of pyrolysis (first and third columns) or the process according to the present invention (second, fourth, and fifth columns) using vegetable biomasses as feed material of the plant.

Table 1.

|  | Pyrolysis | Pyrolysis Reforming Gasification | Pyrolysis % ???100 | Pyrolysis Reforming Gasification % ??? 100 | Pyrolysis Reforming Gasification without $CO_2$ |
|---|---|---|---|---|---|
| $H_2$ | 9.20 | 23.50 | 10.56 | 27.86 | 35.68 |
| $CH_4$ | 6.90 | 27.50 | 7.91 | 36.60 | 48.18 |
| Various hydroc. | 1.75 | 2.16 | 2.01 | 2.61 | 3.43 |
| CO | 27.60 | 7.50 | 31.68 | 8.89 | 11.70 |
| $CO_2$ | 41.41 | 23.00 | 47.54 | 27.26 | - |

Of course, the details of construction and the embodiments may vary widely with respect to what is described and illustrated herein, without thereby departing from the sphere of protection of the present invention, as defined in the annexed claims.

**Claims**

1. A plant (1) for the production of combustible gas starting from vegetable and/or organic biomasses comprising:

- a reactor (3) having a first section (34), where there take place simultaneously the reactions of pyrolysis of the biomass and of gasification of the carbon produced by the reaction of pyrolysis, and a second section (32), where there takes place the reaction of reforming of the CO produced by the reaction of pyrolysis;
- a system of feed (2) of the biomass to the bottom section (34) of the reactor (3);
- means for introduction of steam (45, 47) into the reactor (3);
- an outlet pipe (37) for collection of the combustible gas produced within the reactor (3); and

- means for heating the reactor (3).

2. The plant according to Claim 1, comprising means for slowing down the rate of flow (33) of the gas produced in the reactor (3).

3. The plant according to Claim 2, in which said means for slowing down the rate of flow (33) of the gas are positioned in an intermediate section (43) of the reactor (3) between said first section (32) and said second section (34) so as to slow down the flow of the gas produced by the reactions of pyrolysis of the biomass and gasification of the pyrolytic carbon.

4. The plant according to any one of Claims 1 to 3, comprising a heat exchanger (5) for the purification of the combustible gas coming from the reactor (3) connected to the outlet means (37) for outlet of the combustible gas by means of a pipe (52).

5. The plant according to any one of Claims 1 to 4, in which the system of feed (2) comprises a sealed tank (21), within which the biomass is introduced, and a rotary auger (22) for introduction of the biomass into the bottom section (34) of the reactor (3).

6. The plant according to any one of Claims 1 to 5, in which the reactor (3) comprises a stirrer (35) for stirring the biomass positioned in the bottom section (34) of the reactor (3).

7. The plant according to Claim 6, in which the stirrer (35) is connected to a water-feed pipe (36) for the introduction of water into the bottom section (34) of the reactor (3).

8. The plant according to Claim 6, in which the stirrer (35) is driven by an electric motor (39) via a drive shaft (38) coaxial to the water-feed pipe (36).

9. The plant according to any one of Claims 2 to 8, in which the means for slowing down the rate of flow (33) of the gas produced by the reactions of pyrolysis and gasification comprise a rack (33) containing a particulate mass.

10. The plant according to Claim 9, in which the particulate mass comprises silicon particles.

11. The plant according to Claim 10, in which the silicon particles comprise silicon spheres.

12. The plant according to any one of Claims 1 to 11, in which the means for introduction of steam within the reactor (3) comprise a tube provided with discharge holes (45, 47).

13. The plant according to Claim 12, in which said tube provided with discharge holes (45) is adjacent to the rack (33).

14. The plant according to Claim 12, in which said tube provided with discharge holes (47) is adjacent to the stirrer (35).

15. The plant according to Claim 12, in which said tubes provided with discharge holes (45, 47) are fed by a steam-feed pipe (51).

16. The plant according to any one of Claims 4 to 15, in which the heat exchanger (5) is constituted by a gas/air heat exchanger with fractionated distillation.

17. A process for the production of combustible gas starting from vegetable and/or organic biomasses comprising the following reactions:

   i) a reaction of pyrolysis of the biomass;
   ii) a reaction of gasification of the pyrolytic carbon produced by the reaction of pyrolysis; and
   iii) a reaction of reforming of the CO produced by the reaction of pyrolysis; said process being **characterized in that** the reactions i), ii) and iii) are conducted simultaneously within a reactor in the presence of exogenous steam, thus obtaining hydrogen-and-methane-based combustible gas.

18. The process according to Claim 17, in which the reactor is heated at a temperature of between 400 and 700°C.

5

**19.** The process according to Claim 18, in which the reactor is heated at a temperature of between 550 and 600°C.

**20.** The process according to any one of Claims 17 to 19, in which the reaction of pyrolysis is conducted for a period of time comprised between 2 and 10 minutes.

**21.** The process according to Claim 20, in which the reaction of pyrolysis is conducted for a period of time comprised between 4 and 7 minutes.

**22.** The process according to any one of Claims 17 to 21, in which the reaction of pyrolysis of the biomass and the reaction of gasification of the pyrolytic carbon produced by the reaction of pyrolysis take place in a bottom section of the reactor.

**23.** The process according to any one of Claims 17 to 22, in which the reaction of reforming of the CO produced by the reaction of pyrolysis takes place in a top section of the reactor.

**24.** The process according to any one of Claims 17 to 23, in which there is envisaged a slowing-down of the rate of flow of the gas produced within the reactor using means for slowing down the rate of flow of the gas.

**25.** The process according to Claim 24, in which said means for slowing-down the rate of flow of the gas are positioned in an intermediate section of the reactor between said bottom section and said top section.

**26.** The process according to any one of Claims 16 to 25, in which the steam is blown into the top section of the reactor.

**27.** The process according to any one of Claims 16 to 26, in which the steam is blown into the bottom section of the reactor.

FIG. 1

# FIG. 2

European Patent
Office

**EUROPEAN SEARCH REPORT**

Application Number

EP 06 42 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 81/01010 A (B & W ALPHA DIESEL [DK]; BRUUN B [DK]) 16 April 1981 (1981-04-16)<br>* page 1, line 2 *<br>* page 2, line 15 - line 18 *<br>* page 3, line 30 - line 33 *<br>----- | 1-16 | INV.<br>C10J3/62<br>C10J3/66 |
| X | EP 1 489 046 A (MITSUBISHI MATERIALS CORP [JP]) 22 December 2004 (2004-12-22)<br>* abstract; figures *<br>* page 11, paragraphs 102,103 *<br>* page 11, paragraph 107 - paragraph 111 *<br>* page 14, paragraph 134 - paragraph 138 *<br>* page 16, paragraph 152 *<br>----- | 17-27 | |
| A | EP 1 637 574 A (ZSW [DE]) 22 March 2006 (2006-03-22)<br>* abstract; figures *<br>* column 9, paragraph 35 - column 10, paragraph 37 *<br>* column 11, paragraph 42 *<br>* column 12, paragraphs 45,46 *<br>----- | 1,17 | |
| A | DE 20 2005 019717 U1 (EDER FRANZ [DE]; WAGNER ALOIS [DE]) 4 May 2006 (2006-05-04)<br>* abstract; figures *<br>* page 3, paragraph 18 *<br>----- | 1,17 | TECHNICAL FIELDS SEARCHED (IPC)<br><br>C10J |

The present search report has been drawn up for all claims

| Place of search | Date of completion of the search | Examiner |
|---|---|---|
| The Hague | 21 May 2007 | Lapeyrère, Jean |

**ANNEX TO THE EUROPEAN SEARCH REPORT
ON EUROPEAN PATENT APPLICATION NO.**

EP 06 42 5827

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2007

| Patent document cited in search report | | Publication date | Patent family member(s) | | Publication date |
|---|---|---|---|---|---|
| WO 8101010 | A | 16-04-1981 | DK<br>EP<br>JP | 412379 A<br>0040202 A1<br>56501321 T | 03-04-1981<br>25-11-1981<br>17-09-1981 |
| EP 1489046 | A | 22-12-2004 | CN<br>WO<br>US | 1639056 A<br>03016210 A1<br>2004232046 A1 | 13-07-2005<br>27-02-2003<br>25-11-2004 |
| EP 1637574 | A | 22-03-2006 | DE | 102004045772 A1 | 16-03-2006 |
| DE 202005019717 U1 | | 04-05-2006 | NONE | | |

EPO FORM P0459

For more details about this annex : see Official Journal of the European Patent Office, No. 12/82